# EUROPEAN PATENT APPLICATION

(11) **EP 4 597 791 A1**
(43) Date of publication of application: **06.08.2025**
(21) Application number: 23872008.0
(22) Date of filing: 15.09.2023
(51) Int. Cl.: H02J 7/02, H01M 10/48, H02J 7/00

(54) **SECONDARY BATTERY SYSTEM AND SECONDARY BATTERY CONTROL METHOD**

(30) Priority: 30.09.2022 JP 2022157412
(71) Applicant: Hitachi, Ltd., Tokyo 100-8280 (JP)
(72) Inventor: KOMATSU, Daiki, Tokyo 100-8280 (JP); KAWAJI, Jun, Tokyo 100-8280 (JP); KONISHI, Hiroaki, Tokyo 100-8280 (JP); AMANO, Takashi, Tokyo 100-8280 (JP); HIRUTA, Tomoaki, Tokyo 100-8280 (JP)
(74) Representative: MERH-IP Matias Erny Reichl Hoffmann Patentanwälte PartG mbB
(86) International application number: PCT/JP2023/033784
(87) International publication number: WO 2024/070780

(57) **Abstract**

A secondary battery system (100) is a secondary battery system including a battery bank 3 including a battery rack (B) including a plurality of battery cells connected in series and a power converter (2) for charging and discharging a power system by one or a plurality of the battery racks connected in parallel, the secondary battery system includes a switch (4) that enables the battery rack (B) included in the battery bank (3) to be switched to a power converter of another battery bank; and a controller (5) that monitors a deterioration rate or an age of use of the battery rack (B) and controls the power converter (2) and the switch (4), in which the controller (5) instructs the switch (4) about a power converter to be connected based on the deterioration rate or the age of use of the battery rack (B).

## Description

### Technical Field

The present invention relates to a secondary battery system and a secondary battery control method.

### Background Art

In recent years, mounting of a large stationary storage battery system has been advanced in order to solve system instability due to an increase in renewable energy. However, a large-scale stationary storage battery system has a large investment cost for introduction, and equipment performance changes due to deterioration, so that there is a large barrier to simultaneous introduction. Therefore, a means for gradually adding the storage battery system to level the investment cost has been studied.

When the addition is performed, it is necessary to use both an existing deteriorated battery and a new battery. However, it is not assumed from the beginning of installation of a facility that a battery having different performance is added. When the new battery is added, a change or an arrangement of power wiring is necessary, and an extra cost may be generated.

A power storage system of PTL 1 is a power storage system in which a plurality of chargeable/dischargeable battery units are connected, and a plurality of power converters are configured to charging and discharging the battery units. The power storage system includes a switch that is connected to each of the plurality of battery units and enables the battery unit to be switched to the plurality of power converters, and a controller that controls the plurality of power converters and the switch. The controller includes a combination determination unit that determines a battery unit to be used for charging and discharging and a power converter, a switch control unit that controls an open/close state of the switch so as to connect the battery unit determined by the combination determination unit to the power converter, and a power converter control unit that outputs a charge/discharge instruction to the power converter determined by the combination determination unit.

### Citation List

### Patent Literature

PTL 1: JP 2015-159631 A

### Summary of Invention

### Technical Problem

PTL 1 discloses a case where a connection state between a plurality of battery units and a plurality of power converters and the number of parallels can be changed. However, in PTL 1, the connection state and the number of parallels are not changed depending on a deterioration rate, and there is no description about control when batteries having different performances, for example, an additional battery and an existing battery are mixed, and there is a problem that it is not possible to control batteries having different deterioration, and a cross current occurs, resulting in overdischarge or overcharge.

The present invention has been made to solve the above-described problems, and an object of the present invention is to provide a secondary battery system and a secondary battery control method that can achieve appropriate configuration when the batteries having different performances, for example, the additional battery and the existing battery are mixed.

### Solution to Problem

In order to achieve the above object, a secondary battery system of the present invention is a secondary battery system including a battery bank including a battery rack including a plurality of battery cells connected in series and a power converter for charging and discharging a power system by one or a plurality of the battery racks connected in parallel, and the secondary battery system includes a switch that enables the battery rack included in the battery bank to be switched to a power converter of another battery bank; and a controller that monitors a deterioration rate or an age of use of the battery rack and controls the power converter and the switch, in which the controller instructs the switch about a power converter to be connected based on the deterioration rate or the age of use of the battery rack. Other aspects of the present invention will be described in the following embodiments.

### Advantageous Effects of Invention

According to the present invention, appropriate configuration can be achieved when batteries having different performances, for example, an additional battery and an existing battery are mixed.

### Brief Description of Drawings

[FIG. 1] FIG. 1 is a diagram illustrating a secondary battery system according to a first embodiment.
[FIG. 2] FIG. 2 is a flowchart illustrating connection change processing at an addition timing according to the first embodiment.
[FIG. 3] FIG. 3 is a flowchart illustrating an example of the addition timing according to the first embodiment.
[FIG. 4] FIG. 4 is a diagram illustrating a secondary battery system including a manual switch according to a second embodiment.
[FIG. 5] FIG. 5 is a diagram illustrating a secondary battery system that can select a plurality of connection destinations according to a third embodiment.
[FIG. 6] FIG. 6 is a flowchart illustrating connection change processing in consideration of an SOH difference at an addition timing according to the third embodiment.
[FIG. 7] FIG. 7 is a diagram illustrating a connection example in consideration of the SOH difference at the addition timing according to the third embodiment.
[FIG. 8] FIG. 8 is a flowchart illustrating connection change processing in consideration of the SOH difference before addition according to the third embodiment.
[FIG. 9] FIG. 9 is a diagram illustrating a connection example in consideration of the SOH difference before addition according to the third embodiment.
[FIG. 10] FIG. 10 is a flowchart illustrating connection change processing in consideration of an average SOC before addition according to the third embodiment.
[FIG. 11] FIG. 11 is a diagram illustrating a connection example in consideration of the average SOC before addition according to the third embodiment.
[FIG. 12] FIG. 12 is a diagram illustrating a secondary battery system in a case where there is a plurality of addition timings according to a fourth embodiment.
[FIG. 13] FIG. 13 is a flowchart illustrating connection change processing in the case where there is the plurality of addition timings according to the fourth embodiment.
[FIG. 14] FIG. 14 is a diagram illustrating connection change processing when a power converter fails according to a fifth embodiment.
[FIG. 15] FIG. 15 is a diagram illustrating a secondary battery system in a case where used batteries are added according to a sixth embodiment.
[FIG. 16] FIG. 16 is a flowchart illustrating connection change processing in the case where the used battery is added according to the sixth embodiment.
[FIG. 17] FIG. 17 is a diagram illustrating a connection example in the case where the used batteries are added according to the sixth embodiment.

### Description of Embodiments

Hereinafter, embodiments of the present invention will be described with reference to the drawings. The following descriptions describe specific examples of the contents of the present invention, and the present invention is not limited to these descriptions, and various changes and modifications can be made by those skilled in the art within the scope of the technical idea disclosed in the present specification. In all the drawings for describing the present invention, components having the same function are denoted by the same reference numerals, and repeated description thereof may be omitted.

### First Embodiment

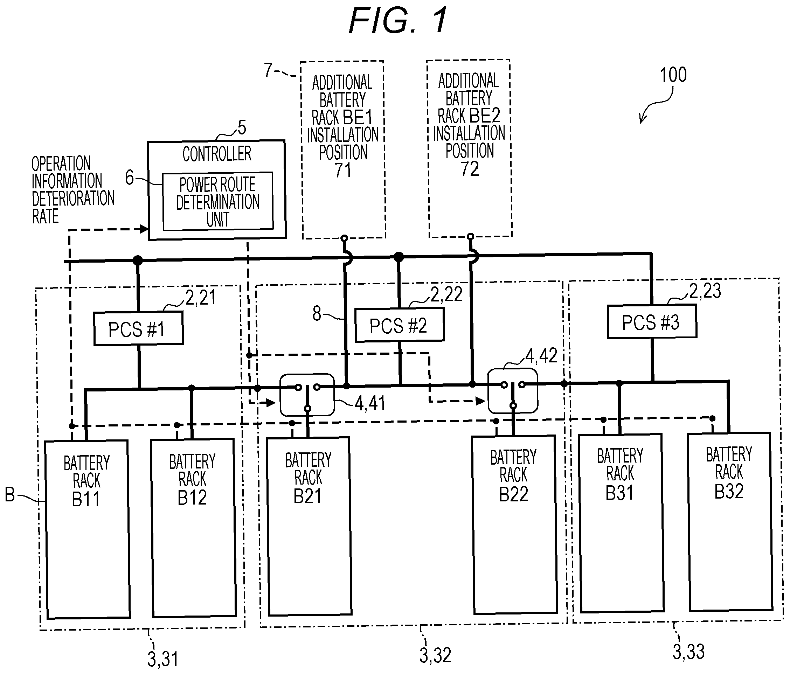

FIG. 1 is a diagram illustrating a secondary battery system 100 according to a first embodiment. In the present embodiment, a system configuration that can cope with addition of a secondary battery system will be described. FIG. 1 illustrates a configuration of a large secondary battery system, and battery racks B in which batteries are connected in series are connected to a load via power converters (power conditioning systems (PCSs)) 2 that convert a direct current into an alternating current with two parallel. The power converter 2 and the battery rack B are collectively referred to as a battery bank 3, and It is assumed that the battery banks 3 are three parallel (battery banks 31, 32, and 33) with respect to the load (not illustrated). The number of series of batteries in the battery rack B, the number of parallels of the battery rack under the power converter, and the number of banks with respect to the load may be any number. Hereinafter, the power converter is appropriately referred to as the PCS.

The secondary battery system 100 includes a switch 4 (switches 41 and 42) that enables the battery rack B included in the battery bank 3 to be switched to a power converter of another battery bank, and a controller 5 that monitors a deterioration rate or an age of use of the battery rack B and controls the power converter 2 and the switch 4. The controller 5 includes a power route determination unit 6, and instructs the switch 4 about the power converter 2 to be connected based on the deterioration rate or the age of use of the battery rack B. Further, an additional battery rack installation position 7 and an additional battery rack wiring 8 necessary when adding the battery rack B are provided in advance from the time of operating the secondary battery system 100. The additional battery rack installation position 7 includes an additional battery rack installation position 71 that is an installation position of an additional battery rack BE1 and an additional battery rack installation position 72 that is an installation position of an additional battery rack BE2.

A battery rack B21 is connected to a PCS 21 (PCS#1) or a PCS 22 (PCS#2) via the switch 41 that can be connected to either the PCS 21 (PCS#1) or the PCS 22 (PCS#2), and a battery rack B22 is connected to a PCS 22 (PCS#2) or a PCS 23 (PCS#3) by a similar switch 42. That is, the battery rack B21 is connected to one side of the switch 41, and the PCS 21 and the PCS 22 are switchably connected to the other side. The battery rack B22 is connected to one side of the switch 42, and the PCS 22 and the PCS 23 are switchably connected to the other side.

The battery rack B21 is basically connected to the PCS 22 (PCS#2) except for the timing of addition or the like, and is connected to the PCS 21 (PCS#1) at the timing of addition or the like. Similarly, the battery rack B22 is basically connected to the PCS 22 (PCS#2) except for the timing of addition or the like, and is connected to the PCS 23 (PCS#3) at the timing of addition or the like. The determination of the timing and the like will be described later.

In addition, the controller 5 has a function of receiving the deterioration rate from each battery rack B in addition to operation information such as a battery voltage and a temperature in each battery rack B and instructing the power converter 2 about a power amount, and, in addition to this function, includes the power route determination unit 6 that selects a power route of each relay, and the power route is mainly selected based on the voltage, temperature, and deterioration rate.

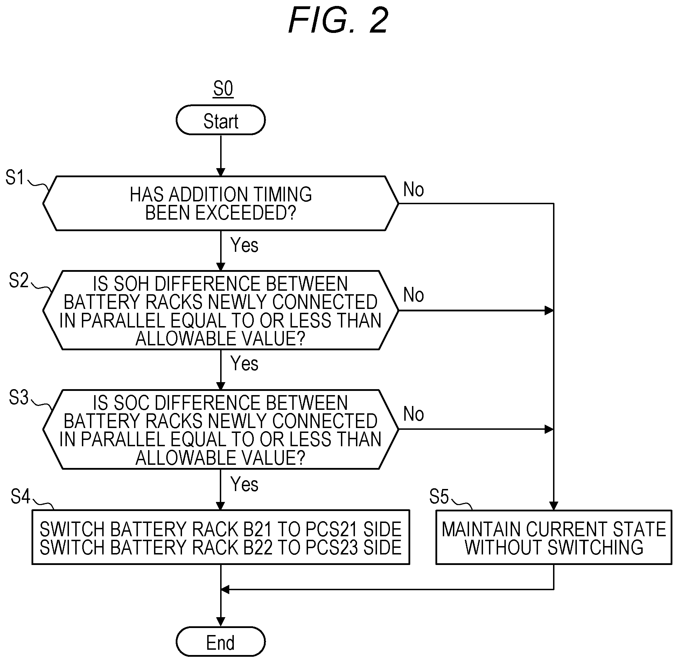

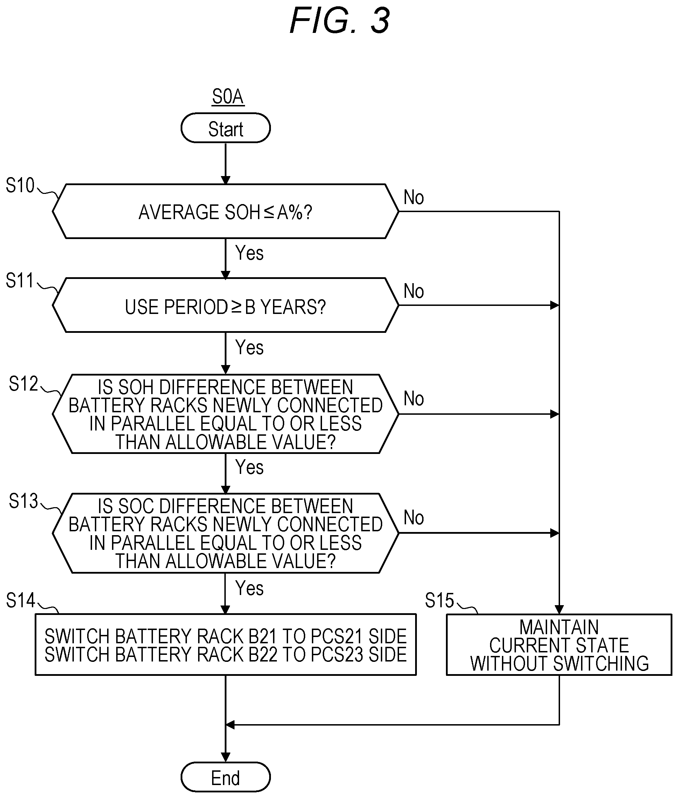

FIG. 2 is a flowchart illustrating connection change processing S0 at an addition timing according to the first embodiment. FIG. 3 is a flowchart illustrating an example of the addition timing according to the first embodiment. FIGS. 2 to 3 are flowcharts in which the controller 5 switches the power route by the switch 4.

First, the flowchart (processing S0) in FIG. 2 will be described. The controller 5 determines whether the addition timing has been exceeded (processing S1). As a premise of processing S1, the previous power route is not a power route that assumes addition. When the power route has already been switched to the route based on the premise of addition, this calculation is not started. In a case where processing S0 starts, for example, the timing of an operation in which the battery system is connected to the system is assumed, but the timing is not limited thereto. In processing S1, it is determined whether it is the addition timing. This corresponds to a case where an administrator of the battery system designates the timing of addition. If it is the addition timing (processing S1: Yes), then the processing proceeds to S2, and if it is not the addition timing (processing S1: No), then the processing proceeds to S5.

In processing S2, the controller 5 determines whether a deterioration rate (state of health (SOH)) difference between the battery racks newly connected in parallel is equal to or less than an allowable value. For example, the battery rack B21 is connected to the PCS#1 side, so that the battery racks B11 and B12 and the battery rack B21 are targeted. Whether there is a difference between these SOHs is calculated, and it is determined whether the parallel connection can be safely changed within the allowable value. If the difference is equal to or less than the allowable value (processing S2: Yes), then the processing proceeds to processing S3, and if the difference is not equal to or less than the allowable value (processing S2: No), then the processing proceeds to S5. In the present embodiment, as the SOH, a ratio (deterioration rate of capacity: SOHQ) of a current charge/discharge capacity to a charge/discharge capacity when new is used. As the SOH, SOHR representing a deterioration rate of resistance is also known.

In processing S3, the controller 5 determines whether a charging rate (a state of charge (SOC)) difference between battery racks newly connected in parallel is equal to or less than an allowable value. For example, the battery rack B21 is connected to the PCS#1 side, so that the battery racks B11 and B12 and the battery rack B21 are targeted. Whether there is a difference between these SOCs is calculated, and it is determined whether the parallel connection can be safely changed within the allowable value. If the difference is equal to or less than the allowable value (processing S3: Yes), then the processing proceeds to processing S4, and if the difference is not equal to or less than the allowable value (processing S3: No), then the processing proceeds to S5.

In processing S4, since it has been confirmed that it is the addition timing and safe, the controller 5 issues a switching instruction to the switch 41 to change the power route and connect the battery rack B21 to the PCS 21 (PCS#1) side, and issues a switching instruction to the switch 42 to connect the battery rack B22 to the PCS 23 (PCS#3) side. The switches 41 and 42 receiving the instructions switch the connections.

In processing S5, if No in any of processing S1 to S3, then the current state is maintained without switching, since it is not the addition timing or the safety of the connection cannot be secured. That is, the power route is not changed, and the switch 41 of the battery rack B21 is maintained on the PCS 22 (PCS#2) side, and the switch 42 of the battery rack B22 is maintained on the PCS 22 (PCS#2) side.

FIG. 3 illustrates a specific example of the addition timing. In processing S10, the controller 5 determines whether the average SOH of the battery system is equal to or less than a certain value (for example, A% or less). If the average SOH is A% or less (processing S10: Yes), then the processing proceeds to processing S11, and if the average SOH is not A% or less (processing S10: No), then the processing proceeds to processing S15.

In processing S11, the controller 5 determines whether a use period is equal to or longer than a certain period (for example, B years or more). If the use period is B years or more (processing S11, Yes), then the processing proceeds to step S12, and if the use period is less than B years (processing S11, No), then the processing proceeds to step S15. In general, addition of a battery is performed when the battery deteriorates and performance cannot be satisfied or when an addable period has been exceeded. Therefore, switching is performed by determining the above. The following processing S12 to S15 correspond to processing S2 to S5, respectively, in FIG. 2.

In parallel with or after the power route change of FIGS. 2 and 3, the additional battery racks are connected to the additional battery rack installation position 7. In this way, existing batteries of three parallel deteriorated to some extent are connected to each of the PCS 21 (PCS#1) and the PCS 23 (PCS#3), and additional new battery racks are connected to the PCS 22 (PCS#2). In a case where the capacity of the new battery racks are the same as the capacity of the existing battery racks when new, when A in processing S10 is 67%, there is no difference between the battery capacities under each PCS, and it is possible to secure the performance at the time of initial delivery by the addition. Note that the reason why A is 67% is that the capacity of the existing battery racks when new is 200% in the case of two parallel and is 67% (≈ 200/3) in the case of three parallel.

In addition, by securing the switch 4 of the power route, the power route determination unit 6, the additional battery rack wiring 8 assuming addition, and the additional battery rack installation position 7, which are main components of the present embodiment, only the installation work of the additional battery rack is performed at the timing of addition, so that it is possible to reduce the work at the time of addition.

### Second Embodiment

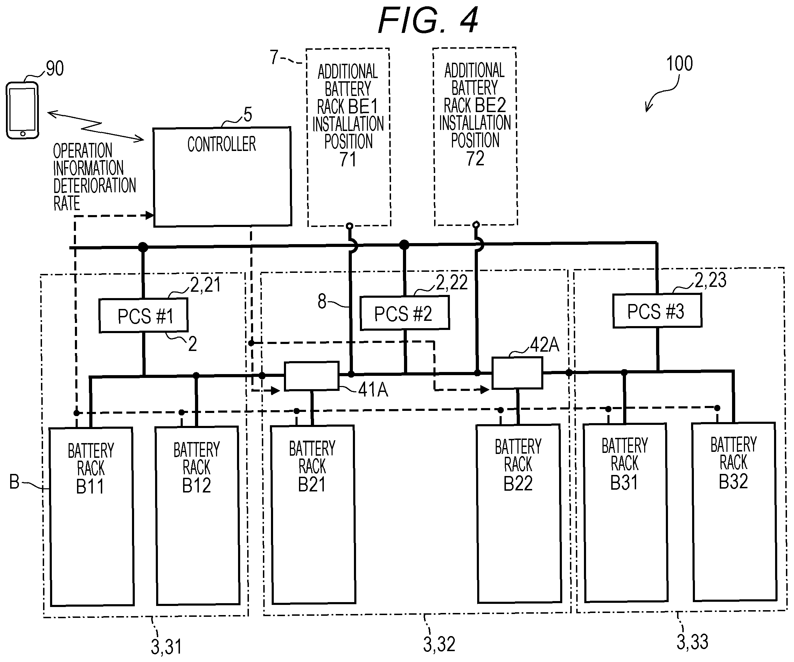

In a second embodiment, an example will be described in which switching of the power route is performed by manual switches 41A and 42A instead of the switch 4 driven by a communication instruction from the controller 5. Switching is mainly performed at the timing of addition, and in the case of a switch that is not driven at another timing, it is necessary to consider the cost and reliability corresponding to the control. Therefore, even a manual switch that is manually driven by a person can perform similar processing. This example will be described with reference to FIG. 4.

FIG. 4 does not include a communication control line between the controller 5 and the manual switches 41A and 42A. Instead, the controller 5 has a communication function with an information terminal 90 of a maintenance engineer.

The secondary battery system 100 includes the manual switches 41A and 42A that enable the battery rack B included in the battery bank 3 to be switched to a power converter of another battery bank, and the controller 5 that monitors the deterioration or the age of use of the battery rack B and controls the power converter 2. In a case where the controller 5 determines that it is the time of the power converter to be connected based on the deterioration rate or the age of use of the battery rack B, the controller 5 notifies the information terminal 90 of the maintenance engineer of the power converter to be connected.

The manual switches 41A and 42A can manually switch the power route in the same direction as in the first embodiment. Specifically, the battery rack B21 can select the power routes of the PCS#1 and #2, and the battery rack B22 can select the power routes of the PCS#2 and #3. At the timing of addition, by manually performing the flow of FIG. 3, the power route can be changed by a simple configuration without new control or a controller function.

### Third Embodiment

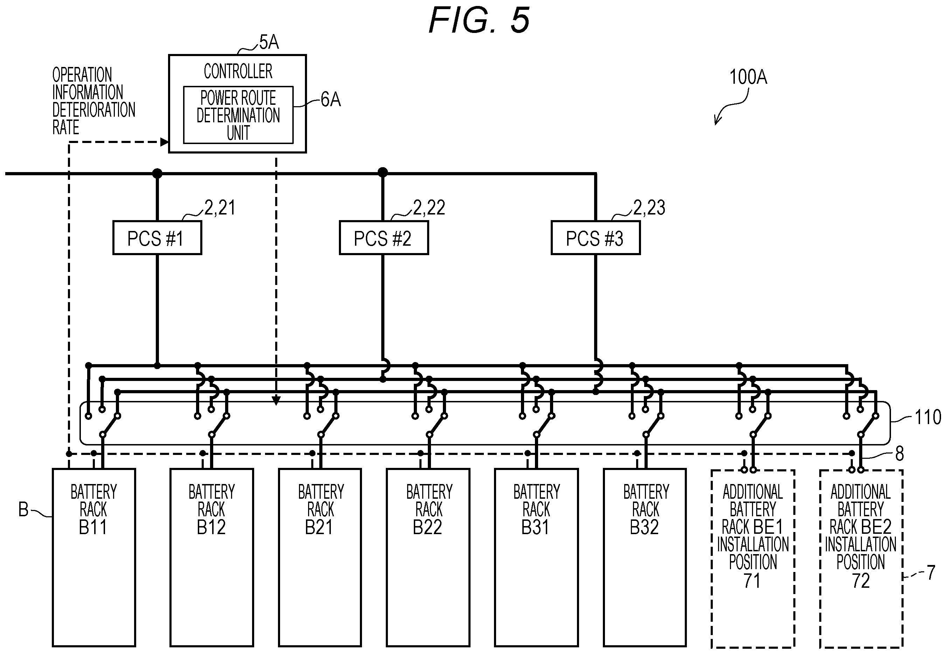

FIG. 5 is a diagram illustrating a secondary battery system 100A that can select a plurality of connection destinations according to a third embodiment. In the third embodiment, a configuration in which the battery rack B can be connected to any PCS (power converter) will be described. Although there is no difference from the first embodiment in that the battery rack B, the PCS 2, and the additional battery rack installation position 7 are provided and the additional battery rack wiring 8 for addition is prepared in advance, each battery rack B includes a power route switch 110 connectable to any PCS 2, and a controller 5A includes a power route determination unit 6A that is a function of determining this power route. One end of the power route switch 110 is connected to each battery rack B, and is connected to the PCS#1 to 3 according to an instruction from the controller 5A. In addition, it is possible to simplify construction at the time of addition by preparing the switch in advance also at the additional battery rack installation position 7. The switch may be included in the battery rack B, and thus may be attached to the additional battery rack B.

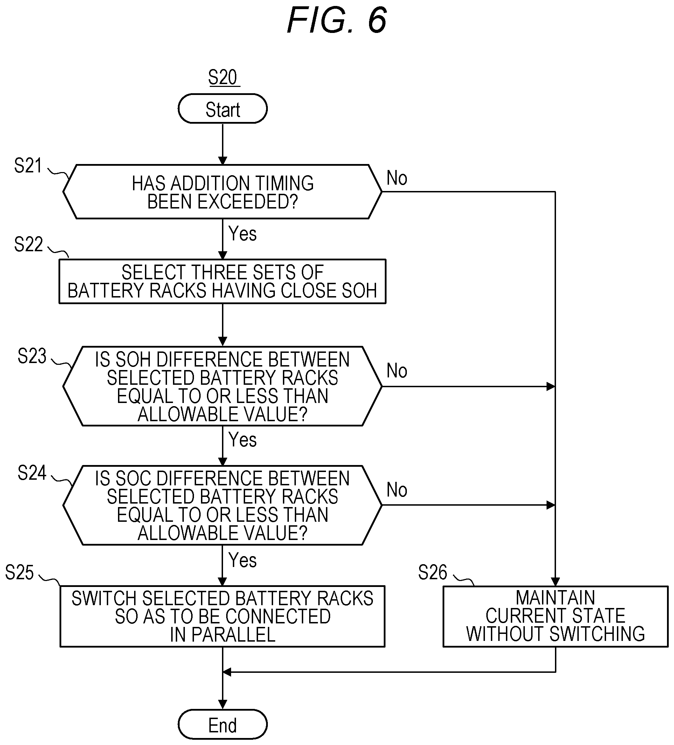

Next, a control flow of the power route switch 110 will be described with reference to FIGS. 6 to 11.

### Connection Change Processing in Consideration of SOH Difference at Addition Timing

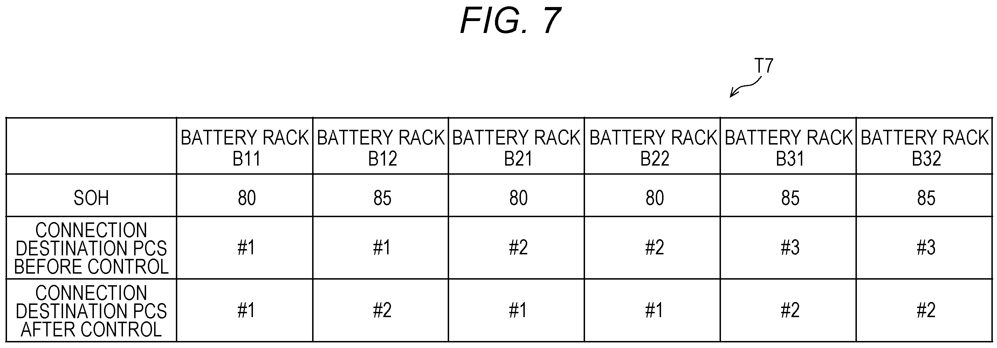

FIG. 6 is a flowchart illustrating connection change processing S20 in consideration of an SOH difference at an addition timing according to the third embodiment. FIG. 7 is a diagram illustrating a connection example in consideration of the SOH difference at the addition timing according to the third embodiment.

FIG. 6 illustrates a control flow in a case where the addition timing is designated as in FIG. 2. First, after starting the calculation, in processing S21, the controller 5A determines whether it is the addition timing (whether the addition timing has been exceeded). If the addition timing has been exceeded (processing S21: Yes), then the processing proceeds to processing S22. If the addition timing has not been exceeded (processing S21: No), then the processing proceeds to processing S26.

In processing S22, the controller 5A selects three sets of battery racks B having close SOHs, and the processing proceeds to processing S22. The three sets are the number of sets assuming that the configuration in which the battery racks B of the two parallel under the PCS as in the first embodiment is changed to three parallel and the power route before addition is changed, and the number of sets may be any number depending on a method of addition. Here, the number of sets is a unit of the number of the battery racks B.

Next, in processing S23, the controller 5A determines whether the SOH difference between the selected battery racks is equal to or less than an allowable value. If the SOH difference is equal to or less than the allowable value (processing S23: Yes), then the processing proceeds to processing S24, and if the SOH difference is not equal to or less than the allowable value (processing S23: No), then the processing proceeds to processing S26.

In processing S24, the controller 5A determines whether the SOC difference between the selected battery racks is equal to or less than the allowable value. If the SOC difference is equal to or less than the allowable value (processing S24: Yes), then the processing proceeds to processing S25, and if the SOC difference is not equal to or less than the allowable value (processing S24, No), then the processing proceeds to processing S26.

In processing S25, since the combination to be arranged in parallel is selected and the SOH and the SOC are determined to be within the safe ranges, the controller 5A issues a switching instruction to the power route switch 110 so that the selected battery racks are arranged in parallel. On the other hand, in processing S26, the current state is maintained without switching.

Table T7 in FIG. 7 shows the SOH of each battery rack, the connection destinations PCSs before the control for performing the control in FIG. 6 and the connection destinations PCSs after the control. Before the control, the battery racks B11 and B12 are connected to PCS#1, the battery racks B21 and B22 are connected to PCS#2, and the battery racks B31 and B32 are connected to PCS#3. Assuming that there is a difference between the SOH of 80 and the SOH of 85 as illustrated in the drawing, it is preferable that when three sets are selected at the time of addition, three sets of SOH80 and three sets of SOH of 85 are selected and respectively operated under the corresponding same PCS so as to reduce the cross current. Therefore, after the control, the connection destinations of the battery rack B11, the battery rack B21, and the battery rack B22 each having the SOH of 80 are changed to the PCS#1, and the connection destination of the battery rack B12, the battery rack B31, and the battery rack B32 each having the SOH of 85 are changed to the PCS#2. After that, since no battery rack is not connected to the PCS#3, two sets of the additional battery racks are connected. On the other hand, in a case where the processing proceeds to processing S26, the connection is not changed, and each battery rack is connected to the connection destination PCS before the control.

### Connection Change Processing in Consideration of SOH Difference Before Addition

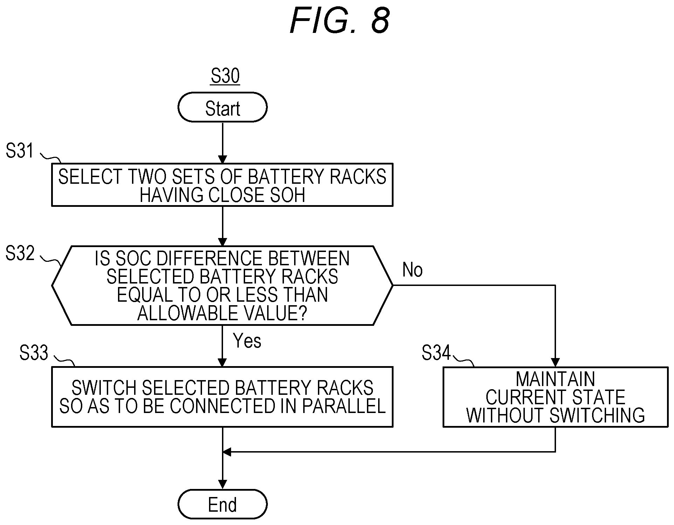

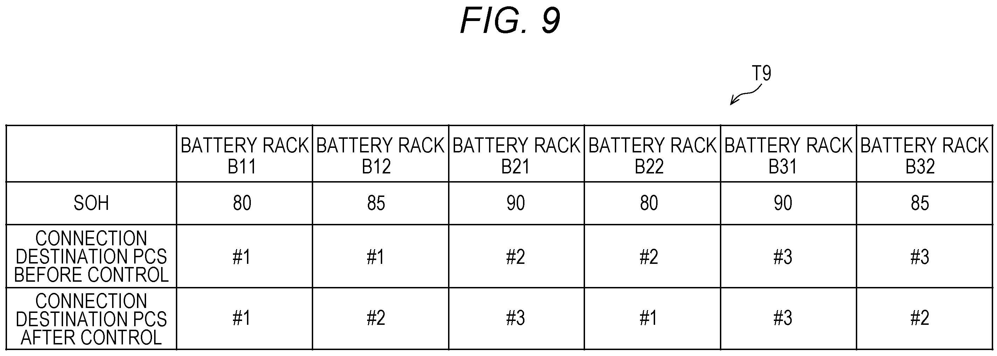

FIG. 8 is a flowchart illustrating connection change processing S30 in consideration of the SOH difference before addition according to the third embodiment. FIG. 9 is a diagram illustrating a connection example in consideration of the SOH difference before addition according to the third embodiment.

FIG. 8 illustrates an example in which selection is made so that driving is performed with sets having close SOHs as much as possible even at a timing other than the addition timing. First, in processing S31, the controller 5A selects two sets of battery racks having close SOHs. The reason why there are two sets in processing S31 while three sets in the control flow of FIG. 6 is that at the time of addition, it is necessary to change the number of parallels from two parallel to three parallel to spare one PCS, but FIG. 6 is a control according to deterioration other than at the time of addition (for example, before addition), and thus the total number of parallels is not changed. In processing S32, the controller 5A determines whether the SOC difference between the selected battery racks is equal to or less than the allowable value. If the SOC difference is equal to or less than the allowable value (processing S32: Yes), then the processing proceeds to processing S33, and if the SOC difference is not equal to or less than the allowable value (processing S32, No), then the processing proceeds to processing S34.

In processing S33, the controller 5A issues a switching instruction to the power route switch 110 so that the selected battery racks are connected in parallel. On the other hand, in processing S34, the current state is maintained without switching. This control flow will be described with reference to FIG. 9.

Table T9 in FIG. 9 shows each battery rack and a respective SOH as in Table T7 in FIG. 7. The connection destination PCS before the control is also as described, and it can be seen that the SOHs of the battery racks connected to a respective one of PCSs have different values before the control. When the connection destination is determined in the control flow of FIG. 8, the battery rack B11 and the battery rack B22 having the same SOH of 80 are connected to PCS#1, the battery rack B12 and the battery rack B32 having the same SOH of 85 are connected to PCS#2, and the battery rack B21 and the battery rack B31 having the same SOH of 90 are connected to PCS#3. By rearranging to a parallel configuration with the battery racks having a similar deterioration rate in this way, it is possible to suppress an unsafe event such as a cross current generated by a difference in the deterioration rate.

### Connection Change Processing in Consideration of Average SOC before Addition

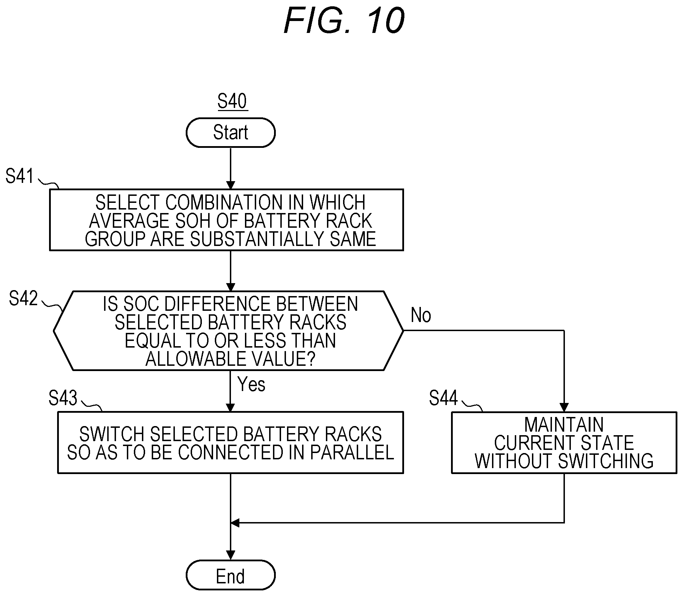

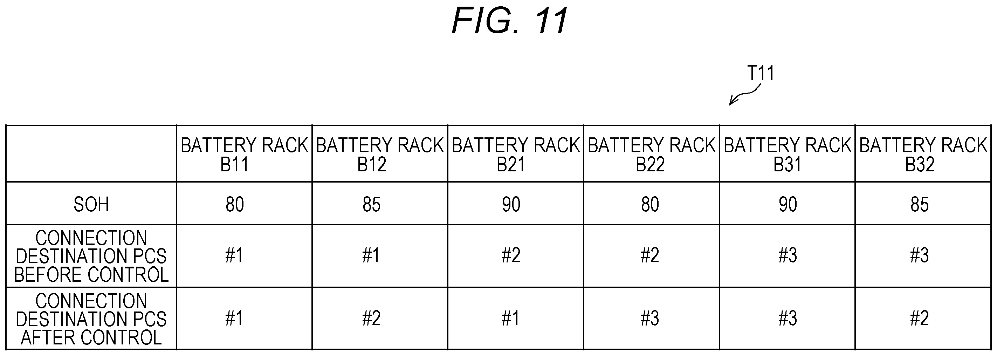

FIG. 10 is a flowchart illustrating connection change processing 40 in consideration of an average SOC before addition according to the third embodiment. FIG. 11 is a diagram illustrating a connection example in consideration of the average SOC before addition according to the third embodiment.

The control flow of FIG. 10 is effective in keeping the total capacity of a battery rack group under each PCS uniform. First, in processing S41, the controller 5A selects a combination in which the average SOHs of the battery rack group are substantially the same. Next, in processing S42, it is determined whether the SOC difference between the selected battery racks is equal to or less than the allowable value. If the SOC difference is equal to or less than the allowable value (processing S42: Yes), then the processing proceeds to processing S43, and if the SOC difference is not equal to or less than the allowable value (processing S42: No), then the processing proceeds to processing S44. In processing S43, the controller 5A issues a switching instruction to the power route switch 110 so that the selected battery racks are connected in parallel. On the other hand, in processing S44, the current state is maintained without switching. This control will be described with reference to FIG. 11.

Table T11 in FIG. 11 shows the SOH of each battery rack as in Table T9 in FIG. 9. The SOH of the battery rack group before the control is, for example, 80 and 85 in the case of the battery rack group connected to the PCS#1, and thus an average value is 82.5, 85 in the battery rack group under the PCS#2, and 87.5 in the battery rack group under the PCS#3. In the state before the control, the average SOHs are different, and thus the capacities that can be used as the battery rack groups are different. On the other hand, by executing the control of FIG. 10, the average SOH can be set to 85 by arranging the battery rack B11 and the battery rack B21 in parallel, the average SOH can be set to 85 by arranging the battery rack B12 and the battery rack B32 in parallel, and the average SOH can be set to 85 by arranging the battery rack B22 and the battery rack B32 in parallel. Therefore, it is possible to keep the deterioration rates and the capacities under PCSs uniform. By keeping the capacities uniform in this way, even when each PCS performs the same operation with the same output, overcharge and overdischarge do not occur, so that simplification of control and safety can be maintained.

As described above, with the configuration as illustrated in FIG. 5, it is possible to flexibly cope with addition and variation in the deterioration rate.

### Fourth Embodiment

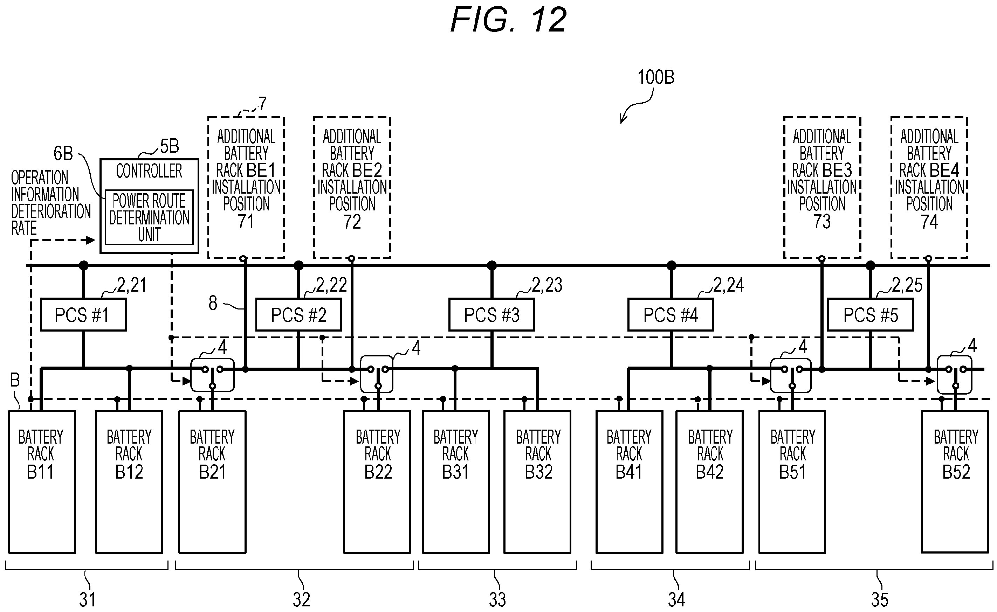

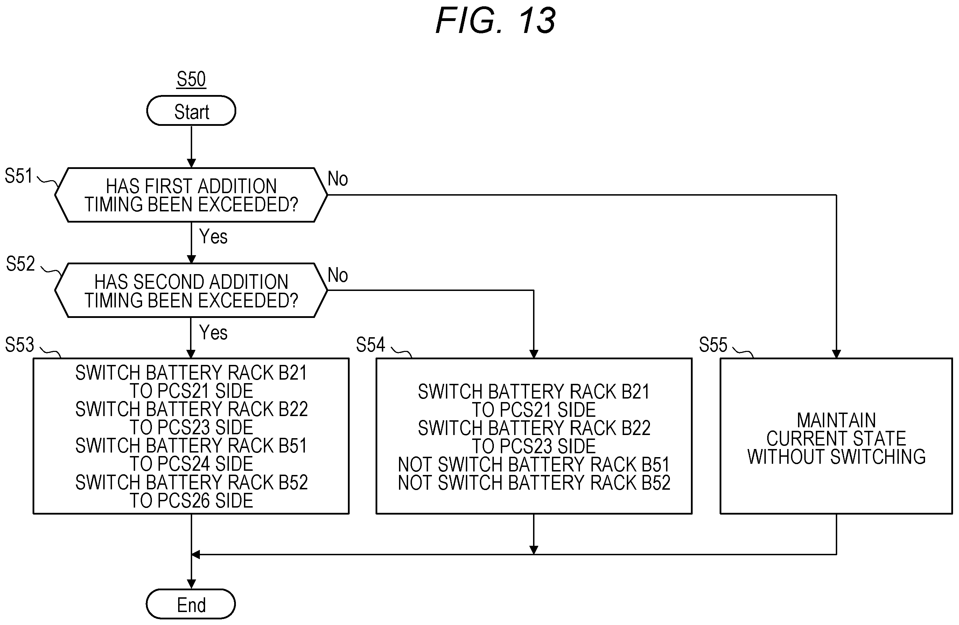

FIG. 12 is a diagram illustrating a secondary battery system 100B in a case where there is a plurality of addition timings according to a fourth embodiment. FIG. 12 illustrates a configuration obtained by expanding the configuration of the first embodiment 2 times, and a controller 5B determines, as a difference, the total power route even in a system configuration obtained by expanding the configuration of the first embodiment 2 times. In addition, there are differences in terms of control and operation, and the addition timing of the additional battery racks BE1 and BE2 and the addition timing of the additional battery racks BE3 and BE4 are different from each other. This is intended to disperse and flatten the investment timings by adding the battery a plurality of times. A method of determining the power route at this time will be described with reference to FIG. 13.

FIG. 13 is a flowchart illustrating connection change processing in S50 the case where there is the plurality of addition timings according to the fourth embodiment. First, in processing S51, the controller 5B (see FIG. 12) determines whether a first addition timing has been exceeded. If the first addition timing has been exceeded (processing S51: Yes), then the processing proceeds to processing S52. If the first addition timing has not been exceeded (processing S51: No), then the processing proceeds to processing S55, and the current state is maintained without switching.

In processing S52, if the second addition timing has been exceeded (processing S52: Yes), then the controller 5B proceeds to processing S53. If the second addition timing has not been exceeded (processing S52: No), then the controller 5B proceeds to processing S54.

In processing S55, the power route is not changed from the initial power route, and the battery racks are connected to respective PCSs.

In processing S54, the controller 5B issues a switching instruction to switch the battery rack B21 to the PCS 21 (PCS#1) side, issues a switching instruction to switch the battery rack B22 to the PCS 23 (PCS#3) side, and maintains battery racks B51 and B52 in the current state without switching.

In processing S54, since the battery racks B21 and B22 connected to the PCS#2 are connected to other PCSs and the PCS#2 is not used, the first addition can be safely performed by installing the additional battery racks BE1 and BE2 in the additional battery rack installation positions 71 and 72, respectively, and connecting the additional battery racks BE1 and BE2 to the PCS#2.

In processing S53, the controller 5B issues a switching instruction to switch the battery rack B21 to the PCS 21 (PCS#1) side, issues a switching instruction to switch the battery rack B22 to the PCS 23 (PCS#3) side, issues a switching instruction to switch the battery rack B51 to the PCS 24 (PCS#4) side, and issues a switching instruction to switch the battery rack B52 to the PCS 26 (PCS#6) side.

In processing S53, since the battery racks B51 and B52 connected to the PCS#5 are connected to other PCSs and the PCS#5 is not used, the second addition can be safely performed by installing the additional battery racks BE3 and BE4 at the installation positions 73 and 74, respectively, and connecting the additional battery racks BE3 and BE4 to the PCS 5. By sequentially changing the plurality of power routes according to the addition timing in this way, it is possible to safely perform addition while reducing the construction cost of addition.

Partial addition as in the present embodiment can be implemented with the same idea even in the configuration as in the second embodiment or the third embodiment.

### Fifth Embodiment

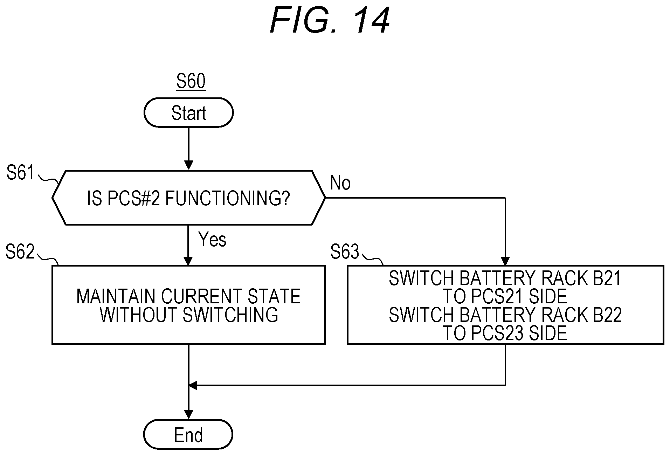

FIG. 14 is a diagram illustrating connection change processing S60 when a power converter fails according to a fifth embodiment. In the fifth embodiment, contents for securing redundancy using the switch 4 used in the present embodiment will be described. The configuration is similar to the configuration of FIG. 1 of the first embodiment.

In the configuration of FIG. 1, a situation is assumed in which the PCS#2 does not function due to failure, inspection, or the like. At this time, when the initial power route is maintained, the battery racks B21 and B22 under the PCS#2 are not used, and a facility operation rate decreases. In such a case, it is desirable to use the batteries by changing the power route. The control at this time will be described with reference to FIG. 14. The controller 5 has a failure detection function of the PCS 2.

In processing S61, the controller 5 determines whether the PCS#2 is functioning. If the PCS#2 is functioning (processing S61: Yes), then the processing proceeds to processing S62, and the power routes of battery racks B21 and B22 are not changed, and the connection is maintained on the PCS#2 side. On the other hand, if the PCS#2 is not functioning (processing S61: No), then the processing proceeds to processing S63, and the power routes of the battery racks B21 and B22 are changed and connected to the PCS#1 and the PCS#3, respectively. As described above, by performing control such that the power route can be changed even in the event of a failure or the like, the facility operation rate can be improved.

### Sixth Embodiment

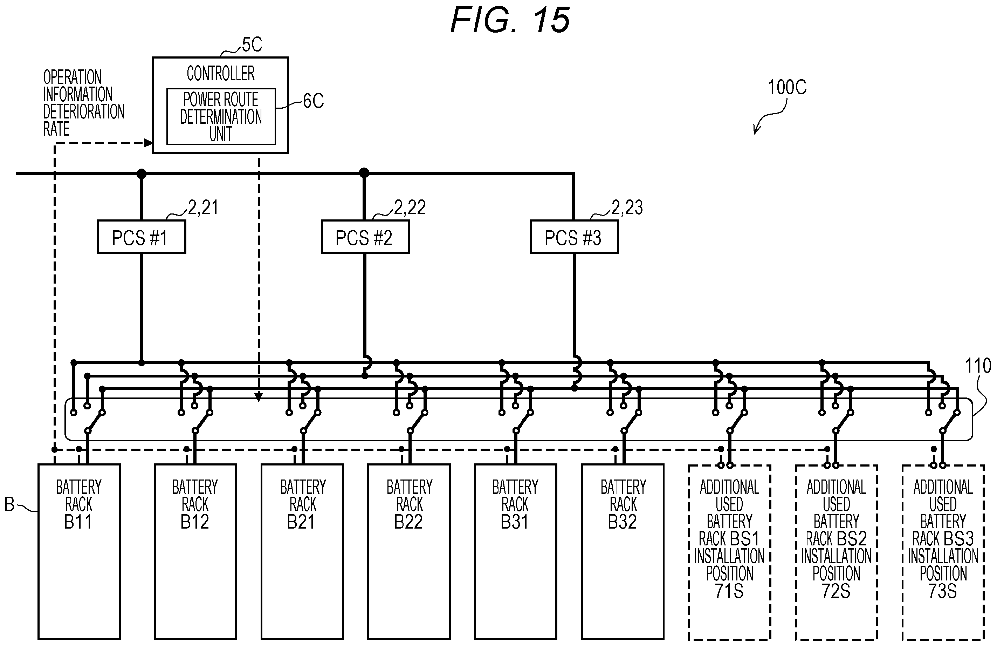

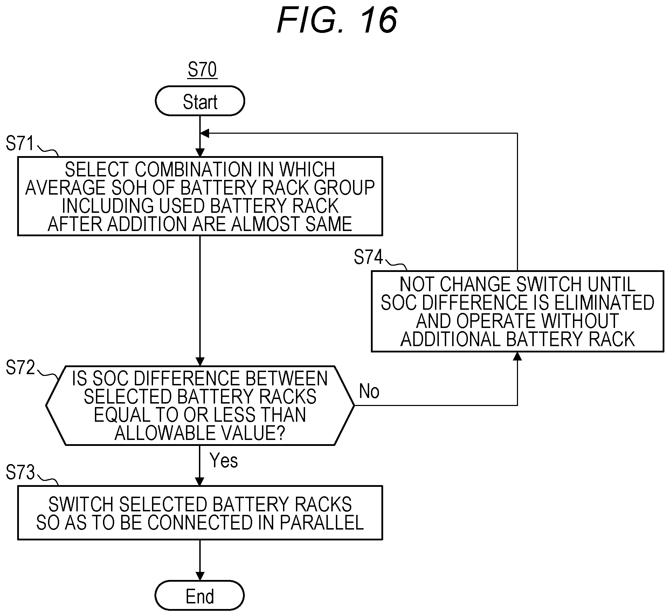

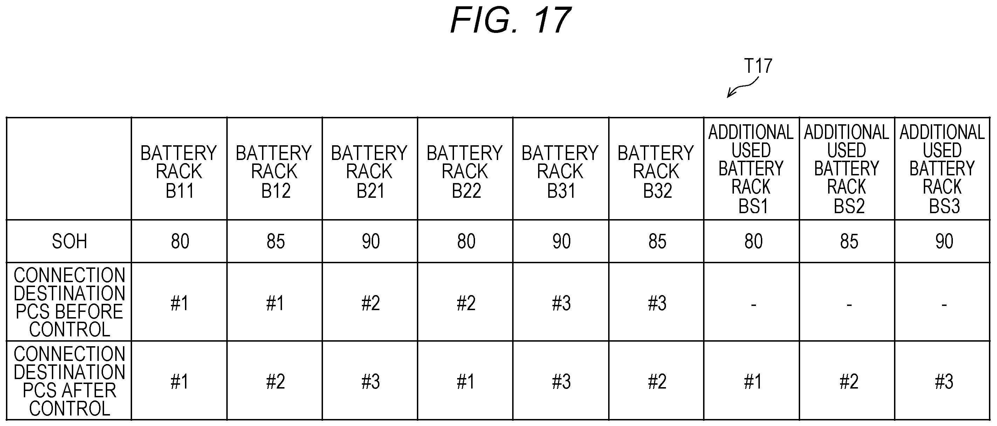

FIG. 15 is a diagram illustrating a secondary battery system 100C in a case where used batteries are added according to a sixth embodiment. In the present embodiment, processing in the case where the additional battery is the used battery will be described. Although the system configuration is similar to that in FIG. 5, the system configuration is changed to additional used battery rack installation positions 71S, 72S, and 73S. When additional used battery racks BS1, BS2, and BS3 are of the same type as the existing battery rack and are used products having the same capacity when new, the capacity is considered to be lower than the capacity when new. Therefore, it is assumed that battery racks corresponding to three parallel are added. The control flow will be described with reference to FIGS. 16 and 17.

FIG. 16 is a flowchart illustrating connection change processing S70 in the case where the used battery is added according to the sixth embodiment. In processing S70 of FIG. 16, the start timing is a timing after the used battery rack is added. First, in processing S71. the controller 5C (see FIG. 15) selects a combination in which the average SOHs of the battery rack group including the used battery rack after addition are almost the same, and the processing proceeds to processing S72.

In processing S72, the controller 5C determines whether the SOC difference between the selected battery racks is equal to or less than the allowable value. If the SOC difference between the selected battery racks is equal to or less than the allowable value (processing S72: Yes), then the processing proceeds to processing S73, and the switching instruction is issued so that the selected battery racks are connected in parallel.

If the SOC difference between the selected battery racks is not equal to or less than the allowable value (processing S72: No), then the processing proceeds to processing S74, the switch is not changed until the SOC difference is eliminated, the operation is performed without an additional battery rack, and the processing returns to processing S71. This will be described with reference to FIG. 17.

FIG. 17 is a diagram illustrating a connection example in the case where the used batteries are added according to the sixth embodiment. Table T17 shows the battery racks, the SOH, the connection destinations PCSs before control, and the connection destinations PCSs after control. At this time, since the additional used battery racks BS1, BS2, BS3 are also used batteries, the SOH decreases and varies. Since no addition is performed before the control, the batteries other than the additional batteries are driven, but after the control, the batteries including the additional battery racks BS1, BS2, BS3 are driven.

In processing S71 of FIG. 16, when a combination of the similar SOHs is selected, the battery rack with the SOH of 80 is the battery racks B11, B22 and the additional battery rack BS1, the battery rack with the SOH of 85 is the battery racks B12, B32 and the additional battery rack BS2, and the battery rack with the SOH of 90 is the battery racks B21, B31 and the additional battery rack BS3, so that these three combinations are obtained. After the control, by placing them under the same PCS, a cross current or the like can be suppressed.

As described above, when the additional battery rack is different from the existing battery (for example, when the additional battery rack is new), the addition methods of the first to fifth embodiments in which control is performed under different PCSs are preferable. However, when used products having the same capacity and the same degree of SOH are added, it is possible to provide redundancy by considering all the battery racks.

In the present embodiment, since the same type of batteries are used, the deterioration rate is used as an index. However, in a case where battery racks having different capacities when new are added, it is also possible to obtain a similar effect by performing the processing of processing S71 with an index of a current capacity of capacity × SOH.

The secondary battery system and the secondary battery control method of the present embodiment have the following features.
(1) A secondary battery system including a battery bank 3 including a battery rack B including a plurality of battery cells connected in series and a power converter 2 for charging and discharging a power system by one or a plurality of the battery racks B connected in parallel, and the secondary battery system includes a switch 4 that enables the battery rack B included in the battery bank 3 to be switched to a power converter of another battery bank; and a controller 5 that monitors a deterioration rate or an age of use of the battery rack B and controls the power converter 2 and the switch 4, in which the controller 5 instructs the switch 4 about a power converter to be connected based on the deterioration rate or the age of use of the battery rack B (see FIGS. 1 to 3). According to this, appropriate configuration can be achieved when batteries having different performances, for example, the additional battery and the existing battery are mixed.
(2) A secondary battery system including a battery bank 3 including a battery rack B including a plurality of battery cells connected in series and a power converter 2 for charging and discharging a power system by one or a plurality of the battery racks B connected in parallel, and the secondary battery system includes a manual switch 4 that enables the battery rack B included in the battery bank 3 to be switched to a power converter of another battery bank; and a controller that monitors a deterioration rate or an age of use of the battery rack B and controls the power converter 2, in which when the controller 5 determines that it is time to change a power converter to be connected based on the deterioration rate or the age of use of the battery rack B, the controller 5 notifies an information terminal 90 of a maintenance engineer of the power converter to be connected.
(3) According to (1), the switch 4 is a switch capable of switching to a plurality of the power converters, and the controller 5 can instruct the switch 4 to switch to which power converter (see FIGS. 1 and 5).
(4) According to (1), a mechanism (for example, the additional battery rack installation position 7 and the additional battery rack wiring 8) that can input power from a battery rack to be newly installed based on a predetermined deterioration rate or age of use is installed in advance for a power converter that is disconnected after the power converter to be connected is changed.
(5) According to (2), a mechanism (for example, the additional battery rack installation position 7 and the additional battery rack wiring 8) that can input power from a battery rack to be newly installed based on a predetermined deterioration rate or age of use is installed in advance for a power converter that is disconnected after the power converter to be connected is changed.
(6) According to (1), when changing a connection destination, when a charging rate or the deterioration rate between the battery racks after the connection change is equal to or less than a predetermined value, the controller 5 instructs the switch 4 to change the connection destination (see FIG. 2).
(7) According to (2), when changing a connection destination, when a charging rate or the deterioration rate between the battery racks after the connection change is equal to or less than a predetermined value, the controller 5 notifies the information terminal 90 of the connection destination. As a result, the maintenance engineer can accurately know when to switch the manual switch 4.
(8) According to (3), the controller 5 instructs the switch 4 about a connection destination so as to change the connection so that the difference between the deterioration rates of the battery racks connected in parallel is a predetermined value or less (see FIGS. 8 and 9).
(9) According to (3), the controller 5 instructs the switch 4 about a connection destination so that the total capacity of the battery racks connected to the power converters and the total capacity of the battery racks connected to another power converter are equal to or less than a predetermined value (see FIGS. 10 and 11).
(10) According to (1), when the installation timing of a battery rack to be newly installed is a plurality of times, the controller 5 instructs the switch 4 about a connection destination based on the deterioration rate or the age of use of the battery rack B for each installation timing (see FIGS. 12 and 13).
(11) According to (2), when the installation timing of a battery rack to be newly installed is plural times, the controller 5 notifies information terminal 90 of a connection destination based on the deterioration rate or the age of use of the battery rack B for each installation timing (see FIG. 4). As a result, the maintenance engineer can accurately know when to switch the manual switch 4.
(12) According to (1), when detecting that the power converter of a connection destination does not function, the controller 5 instructs the switch 4 to change the connection destination so as to be connected to a power converter other than the power converter (see FIG. 14).
(13) According to (2), when detecting that the power converter of a connection destination does not function, the controller 5 notifies the information terminal 90 of the connection destination so as to be connected to a power converter other than the power converter (see FIGS. 4 and 14). As a result, the maintenance engineer can accurately know when to switch the manual switch 4.
(14) According to (1), (3), (4), (6), (8), (9), (10), and (12), when a battery rack to be newly installed is not new but deteriorated and can be handled equally to an existing battery rack, the controller 5 instructs the switch 4 to change a connection destination so that an SOH difference between the battery racks connected to the power converter is a predetermined value or less by combining a new battery and an existing battery (see FIGS. 15 to 17).
(15) According to (2), (5), (7), (11), and (13), when a battery rack to be newly installed is not new but deteriorated and can be handled equally to an existing battery rack, the controller 5 notifies the information terminal 90 of the connection destination so that the SOH difference between the battery racks connected to the power converter 2 is a predetermined value or less by combining the new battery and the existing battery. As a result, the maintenance engineer can accurately know when to switch the manual switch 4.
(16) A secondary battery control method for a secondary battery system 100, the secondary battery system 100 including a battery bank 3 including a battery rack B including a plurality of battery cells connected in series and a power converter 2 for charging and discharging a power system by one or a plurality of the battery racks connected in parallel, the secondary battery system including a switch 4 that enables the battery rack B included in the battery bank 3 to be switched to a power converter of another battery bank; and a controller 5 that monitors a deterioration rate or an age of use of the battery rack B and controls the power converter 2 and the switch 4, wherein the controller 5 instructs the switch 4 about a power converter to be connected based on the deterioration rate or the age of use of the battery rack B (see FIGS. 1 to 3). According to this, appropriate configuration can be achieved when batteries having different performances, for example, the additional battery and the existing battery are mixed.

According to the present embodiment, it is possible to reduce the cost at the time of rearrangement and addition of the battery and secure redundancy at the time of failure of the converter or the like.

### Reference Signs List

2, 21, 22, 23 PCS (power converter)
3, 31, 32, 33 battery bank
4, 41, 42 switch
41A, 41A manual switch
5, 5A, 5B, 5C controller
6 power route determination unit
7, 71, 72 additional battery rack installation position 71S, 72S, 73S additional used battery rack installation position
8 additional battery rack wiring
90 information terminal
100, 100A, 100B, 100C secondary battery system
110 power route switch (switch)
71, 72 additional battery rack installation position
B battery rack
B11, B12, B22, B31, B32 battery rack
BE1, BE2, BE3, BE4 additional battery rack
BS1, BS2, BS3 additional used battery rack

## Claims

1. A secondary battery system comprising:
a battery bank including a battery rack including a plurality of battery cells connected in series and a power converter configured to charge and discharge a power system by one or a plurality of the battery racks connected in parallel;
a switch configured to enable the battery rack included in the battery bank to be switched to a power converter of another battery bank; and
a controller configured to monitor a deterioration rate or an age of use of the battery rack and control the power converter and the switch,
wherein the controller instructs the switch about the power converter to be connected based on the deterioration rate or the age of use of the battery rack.

2. A secondary battery system comprising:
a battery bank including a battery rack including a plurality of battery cells connected in series and a power converter configured to charge and discharge a power system by one or a plurality of the battery racks connected in parallel;
a manual switch configured to enable the battery rack included in the battery bank to be switched to a power converter of another battery bank; and
a controller configured to monitor a deterioration rate or an age of use of the battery rack and control the power converter,
wherein when the controller determines that it is time to change a power converter to be connected based on the deterioration rate or the age of use of the battery rack, the controller notifies an information terminal of a maintenance engineer of the power converter to be connected.

3. The secondary battery system according to claim 1,
wherein the switch is a switch capable of switching to a plurality of the power converters, and
the controller instructs the switch to switch to which power converter.

4. The secondary battery system according to claim 1, wherein a mechanism that can input power from a battery rack to be newly installed based on a predetermined deterioration rate or age of use is installed in advance for a power converter that is disconnected after the power converter to be connected is changed.

5. The secondary battery system according to claim 2, wherein a mechanism that can input power from a battery rack to be newly installed based on a predetermined deterioration rate or age of use is installed in advance for a power converter that is disconnected after the power converter to be connected is changed.

6. The secondary battery system according to claim 1, wherein when changing a connection destination, when a charging rate or the deterioration rate between the battery racks after the connection change is equal to or less than a predetermined value, the controller instructs the switch to change the connection destination.

7. The secondary battery system according to claim 2, wherein when changing a connection destination, when a charging rate or the deterioration rate between the battery racks after the connection change is equal to or less than a predetermined value, the controller notifies the information terminal of the connection destination.

8. The secondary battery system according to claim 3, wherein the controller instructs the switch about a connection destination to change a connection so that a difference between deterioration rates of the battery racks connected in parallel is a predetermined value or less.

9. The secondary battery system according to claim 3, wherein the controller instructs the switch about a connection destination so that the total capacity of the battery racks connected to the power converters and the total capacity of the battery racks connected to another power converter are equal to or less than a predetermined value.

10. The secondary battery system according to claim 1,
wherein when the installation timing of a battery rack to be newly installed is a plurality of times,
the controller instructs the switch about a connection destination based on the deterioration rate or the age of use of the battery rack for each installation timing.

11. The secondary battery system according to claim 2,
wherein when the installation timing of a battery rack to be newly installed is a plurality of times,
the controller notifies the information terminal of a connection destination based on the deterioration rate or the age of use of the battery rack for each installation timing.

12. The secondary battery system according to claim 1, wherein when detecting that the power converter of a connection destination does not function, the controller instructs the switch to change the connection destination to be connected to a power converter other than the power converter.

13. The secondary battery system according to claim 2, wherein when detecting that the power converter of a connection destination does not function, the controller notifies the information terminal of the connection destination to be connected to a power converter other than the power converter.

14. The secondary battery system according to any one of claims 1, 3, 4, 6, 8, 9, 10, and 12, wherein when a battery rack to be newly installed is not new but deteriorated and can be handled equally to an existing battery rack, the controller instructs the switch to change a connection destination so that an SOH difference between the battery racks connected to the power converter is a predetermined value or less by combining a new battery and an existing battery.

15. The secondary battery system according to any one of claims 2, 5, 7, 11, and 13, wherein when a battery rack to be newly installed is not new but deteriorated and can be handled equally to an existing battery rack, the controller notifies the information terminal of a connection destination so that an SOH difference between the battery racks connected to the power converter is a predetermined value or less by combining a new battery and an existing battery.

16. A secondary battery control method for a secondary battery system, the secondary battery system comprising:
a battery bank including a battery rack including a plurality of battery cells connected in series and a power converter configured to charge and discharge a power system by one or a plurality of the battery racks connected in parallel;
a switch configured to enable the battery rack included in the battery bank to be switched to a power converter of another battery bank; and
a controller configured to monitor a deterioration rate or an age of use of the battery rack and control the power converter and the switch,
wherein the controller instructs the switch about a power converter to be connected based on the deterioration rate or the age of use of the battery rack.
